# EUROPÄISCHE PATENTSCHRIFT

(11) **EP 1 357 323 B1**
(45) Veröffentlichungstag und Bekanntmachung des Hinweises auf die Patenterteilung: **13.10.2004**
(21) Anmeldenummer: 03007857.0
(22) Anmeldetag: 05.04.2003
(51) Int. Cl.: F16L 27/107, F01N 7/18, F24F 13/02, F16L 51/02

(54) **Vorrichtung zur Bildung einer flexiblen Verbindung**
Device for forming a flexible connection
Dispositif pour former un raccordement flexible

(30) Priorität: 25.04.2002 DE 20206520 U
(43) Veröffentlichungstag der Anmeldung: 29.10.2003
(73) Patentinhaber: Geiger, Robert, 89335 Ichenhausen (DE)
(72) Erfinder: Geiger, Robert, 89335 Ichenhausen (DE)
(74) Vertreter: Munk, Ludwig, Dipl.-Ing.

(56) Entgegenhaltungen:
- EP-A- 0 546 246
- CH-A- 615 261
- DE-U- 7 214 176
- FR-A- 2 643 699

## Beschreibung

Die Verbindung betrifft eine Vorrichtung zur Bildung einer flexiblen Verbindung zwischen zwei Elementen einer von einem Gasstrom durchströmbaren Kanalanordnung, insbesondere zum flexiblen Anschließen eines Kanalgehäuses an einen Anschlussstutzen eines gastechnischen Geräts, mit einem aus einem flexiblen Material bestehenden, schlauchförmigen Balg, der mit seinen Enden an jeweils einem Halterahmen festlegbar ist, dessen Rahmenschenkel durch Profilabschnitte gebildet werden, die vorzugsweise durch mit in einen jeweils zugeordneten, profilseitigen Einsteckkanal einsteckbaren Schenkeln versehene Eckverbindungselemente miteinander verbindbar sind, wobei im Bereich der dem jeweils benachbarten Element der Kanalanordnung zugewandten Seite der Halterahmen jeweils mindestens eine Wulstanordnung vorgesehen ist.

Bei einer bekannten Anordnung dieser Art ist der Balg mit seinen Enden an einem in eine rahmenseitig vorgesehene Sicke eingreifenden, die Wulstanordnung bildenden, umlaufenden Dichtprofil befestigt. Dies führt zu einer umständlichen und aufwendigen Herstellung, da die Dichtprofile zunächst umlaufend am Balg angebracht werden müssen und erst dann in die jeweils zugeordnete, rahmenseitige Sicke eingedrückt werden können. Ein weiterer Nachteil ist darin zu sehen, dass die Verbindung zwischen den Dichtprofilen und dem hieran befestigen Balg durch die auf den Balg wirkenden Kräfte stark belastet werden kann, was zu Undichtheiten führen kann.

Aus dem Dokument EP-A-0 546 246 ist eine Vorrichtung nach dem Oberbegriff des Anspruchs 1 bekannt.

Hiervon ausgehend ist es daher die Aufgabe der vorliegenden Erfindung, eine einfache und kostengünstige Herstellung einer Vorrichtung eingangs erwähnter Art zu ermöglichen sowie eine hohe Funktionssicherheit zu gewährleisten.

Diese Aufgabe wird erfindungsgemäß dadurch gelöst, dass der Balg die Halterahmen durchgreift und jeweils um die radial innere Kante der dem jeweils benachbarten Element der Kanalanordnung zugewandten Seite der Halterahmen radial nach außen umgeschlagen ist, dass die die Rahmenschenkel bildenden Profilabschnitte im Bereich ihrer dem jeweils benachbarten Element der Kanalanordnung zugewandten Seite jeweils wenigstens eine elastische Leiste tragen und dass die radial nach außen verlaufenden Endbereiche des Balgs die halterahmenseitig Halterahmen vorgesehenen, elastischen Leisten unter Bildung jeweils einer Wulstanordnung lose übergreifen und radial außerhalb dieser am zugeordneten Halterahmen festlegbar sind.

Infolge der radialen Balgumlenkung benötigen die Halterahmen bzw. deren Rahmenschenkel keine in Kanalachsrichtung offene Einsteckschlitze zur Aufnahme der Balgenden. Die den Rahmenschenkeln zugrundeliegenden Profilabschnitte können daher in vorteilhafter Weise einen im Wesentlichen einschenkligen, geschlossenen Kastenquerschnitt aufweisen, was eine kompakte Anordnung mit hoher Biege- und Verbindungssteifigkeit ergibt. Die Halterahmen greifen in vorteilhafter Weise in eine jeweils zugeordnete, durch die radiale Umlenkung des Balgs gebildete Ecke ein, wodurch sich eine Zugentlastung der nach radial außen umgelenkten Balgenden ergibt. Die die elastischen Leisten der Rahmenschenkel lose übergreifenden Balgenden werden beim Anbau der erfindungsgemäßen Vorrichtung an den Anbauflansch eines zugeordneten Elements der Kanalanordnung zwischen diesem und den halterahmenseitigen elastischen Leisten eingespannt, wodurch die rahmenseitige Halterung der Endbereiche des Balgs entlastet wird. Die rahmenseitig vorgesehene, von den nach außen umgelenkten Balgenden umfahrenen elastischen Leisten kommen hier in vorteilhafter Weise nicht in direkte Anlage mit dem gegenüberliegenden Anbauflansch des jeweils benachbarten Elements der Kanalanordnung und benötigen daher keine Dichtoberfläche. Diese Dichtfunktion übernimmt das die die elastischen Leisten übergreifende Balgmaterial. Die elastischen Leisten fungieren nur als Andrückleisten, die selbst keine dichtende Oberfläche benötigen. Dies und die Tatsache, dass zwischen dem Balg und den elastischen Leisten keine feste Verbindung benötigt wird, stellen sicher, dass die elastischen Leisten bereits bei der Herstellung des den Rahmenschenkeln zugrundeliegenden Profils an diesem angebracht werden können, so dass beim Abschneiden längerer Profilstangen bereits mit den elastischen Profilelementen komplettierte Rahmenschenkel anfallen.

Vorteilhafte Ausgestaltungen und zweckmäßige Fortbildungen der übergeordneten Maßnahmen sind in den Unteransprüchen angegeben. So können die als Anpressleisten fungierenden, elastischen Leisten zweckmäßig im Bereich der radial inneren Außenkante der die Rahmenschenkel bildenden Profilabschnitte angeordnet sein, die im Bereich der radial äußeren Außenkante eine nach radial innen offene Einstecktasche für den zugeordneten Endbereich des Balgs aufweisen. Dies ergibt einen zuverlässigen Eingriff der als Anpressorgane fungierenden elastischen Leisten in die durch die radiale Balgumlenkung gebildete Ecke, wodurch sich eine zuverlässige Dichtkante mit einer durch das Balgmaterial selbst gebildeten Dichtoberfläche ergibt. Diese Wirkung wird dadurch noch verstärkt, dass die elastischen Profilelemente einen keilförmigen, nach radial außen sich verjüngenden Querschnitt aufweisen.

Eine weitere vorteilhafte Maßnahmen kann darin bestehen, dass die elastischen Leisten als Hohlkammerleisten ausgebildet sind. Dies ergibt in vorteilhafter Weise auch bei Verwendung von vergleichsweise steifem, aber kostengünstigem Material einen ausreichend großen Federweg der als Anpressorgane fungierenden elastischen Leisten, so dass auch im Falle von Unebenheiten eine zuverlässige Anlage gewährleistet ist.

Vorteilhaft können die elastischen Leisten mit einer rückwärtigen Halteleiste versehen sein, die in eine zum benachbarten Organ der Kanalanordnung hin offene Sicke des zugeordneten Rahmenschenkels eingepresst ist. Dies ergibt einen zuverlässigen Halt. In der Regel genügt es, wenn die Rahmenschenkel nur mit über ihre Länge durchgehenden, elastischen Leisten versehen sind. Es ist daher möglich, bereits längere Profilstangen, die zur Bildung der die Rahmenschenkel bildenden Profilabschnitte abgelängt werden, mit einer durchgehenden, elastischen Leiste zu versehen, was die Herstellung eines zuverlässigen Presssitzes erleichtert.

In vorteilhafter Weiterbildung der übergeordneten Maßnahmen können im Bereich des radial äußeren Rands der Rahmenschenkel Klammern vorgesehen sein, die jeweils eine den Eingangsquerschnitt der Einstecktasche überquerende, zum Eingriff mit dem in die Einstecktasche eingeführten Balgende bringbare Halteklaue aufweisen. Dies gewährleistet eine einfache und zuverlässige, rahmenseitige Fixierung des Balgendes. Zweckmäßig kann die Halteklaue balgseitig gezackt sein.

Eine weitere zweckmäßige Maßnahme kann darin bestehen, dass die die Rahmenschenkel bildenden Profilabschnitte im Bereich des radial äußeren Rands ihrer der Einstecktasche gegenüberliegenden Seite mit einem Steg versehen sind, der von den zugeordneten, im Wesentlichen C-förmigen Klammern umfassbar ist. Dies ergibt in vorteilhafter Weise einen formschlüssigen Rastsitz der Klammern, wodurch diese gegen selbsttätiges Abgehen gesichert sind.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen Luftkanal mit einer erfindungsgemäßen Vorrichtung im Schnitt,
- Figur 2: den Querschnitt der Rahmenschenkel der Halterahmen der Anordnung gemäß Figur 1 in vergrößerter Darstellung,
- Figur 3: einen Ausschnitt aus Figur 1 in vergrößerter Darstellung,
- Figur 4: den Eckbereich eines Halterahmens der Anordnung gemäß Figur 1 mit im Bereich der vom anderen Halterahmen abgewandten Flanke der Rahmenschenkel abgetrenntem Balg und
- Figur 5: eine von radial innen gesehene Draufsicht auf eine Klammer der Anordnung gemäß Figuren 1 und 3.

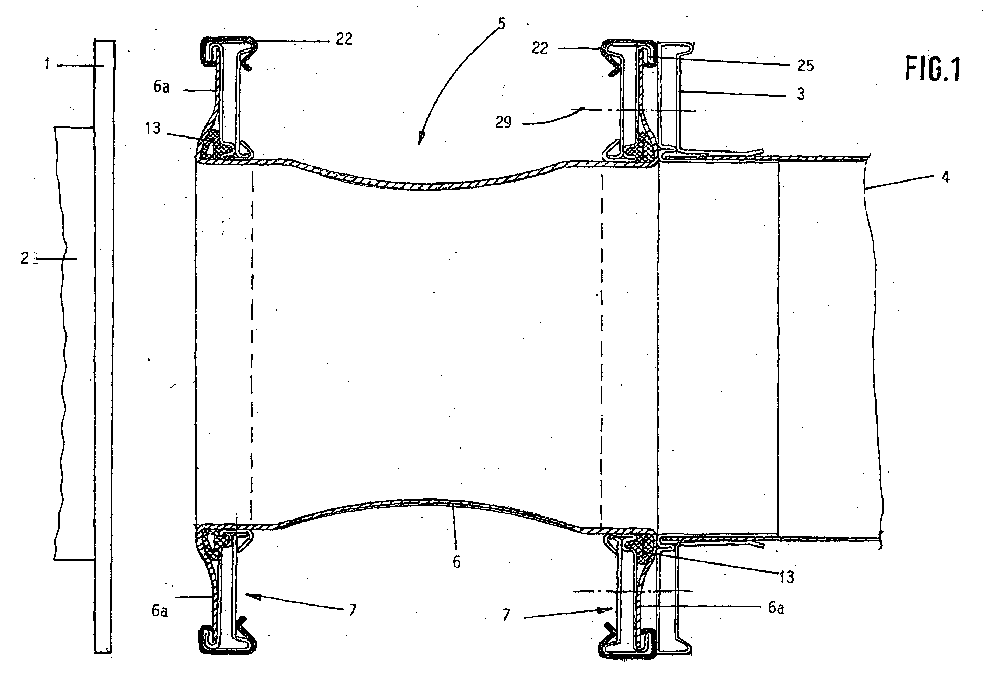

In Figur 1 ist ein mit einem Anschlussflansch 1 versehenes, lufttechnisches Gerät 2 angedeutet, dem ein mit einem Anschlussflansch 3 versehenes Kanalgehäuse 4 nachgeordnet ist. Dieses ist als im Querschnitt rechteckförmiges Blechgehäuse ausgebildet, das an seinen Enden mit jeweils einem umlaufenden, rechteckförmigen Rahmen versehen ist, dessen Rahmenschenkel als Abschnitte eines zweischenkligen Winkelprofils ausgebildet sind, dessen in Kanalachsrichtung verlaufender Schenkel einen Einsteckschlitz zur Aufnahme des zugeordneten Endes des Kanalgehäuses 4 aufweist und dessen rechtwinklig hierzu verlaufender Schenkel den Anschlussflansch 3 bildet.

Zwischen dem lufttechnischen Gerät 2 und dem Kanalgehäuse 4 ist eine flexible Verbindungsvorrichtung 5 vorgesehen, durch die ein eventueller Achsversatz etc. ausgleichbar ist. Die Verbindungsvorrichtung 5 besteht aus einem aus flexiblem Material, beispielsweise einer flexiblen Kunststoffhaut, hergestellten Balg 6, dessen Enden an jeweils einem Halterahmen 7 festlegbar sind. Der Querschnitt des Balgs 6 entspricht in etwa dem Querschnitt des Kanalgehäuses 4. Die Halterahmen 7 sind dementsprechend im dargestellten Beispiel als Rechteckrahmen mit einem der Außenkonfiguration des Kanalgehäuses 4 in etwa entsprechenden, rechteckförmigen Durchgangsquerschnitt ausgebildet. Die Halterahmen 7 bilden an den Enden der Verbindungsvorrichtung 5 vorgesehene Flansche, mit denen die Verbindungsvorrichtung 5 am jeweils benachbarten Anschlussflansch 1 bzw. 3 des lufttechnischen Geräts 2 bzw. des Kanalgehäuses 4 dichtend festlegbar ist.

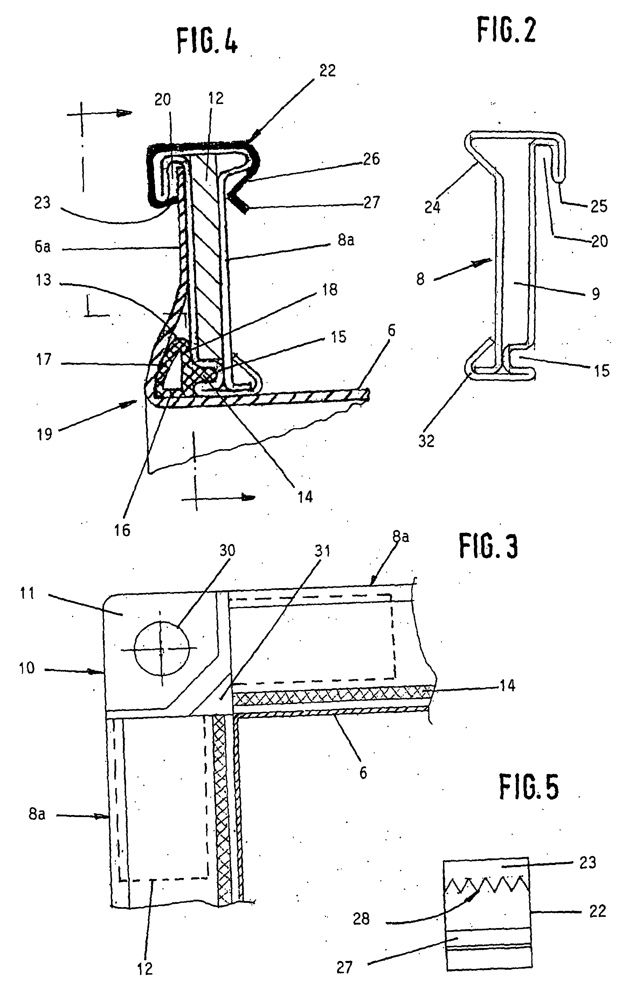

Zur Bildung der Rahmenschenkel der Halterahmen 7 finden Abschnitte eines stangenförmigen Profils 8 mit dem der Figur 2 zugrundeliegenden Querschnitt Verwendung. Dabei handelt es sich um ein aus einem Blechstreifen hergestelltes Walzprofil, das einen einschenkligen Querschnitt, hier in Form eines geschlossenen Kastenquerschnitts, aufweist. Auf diese Weise ergibt sich ein über die Profillänge durchgehender, geschlossener Einsteckkanal 9. Die die Rahmenschenkel bildenden Profilabschnitte werden durch aus Figur 3 ersichtliche Eckverbindungselemente 10 miteinander verbunden, die von einer quadratischen Tragplatte 11 abstehende, rechtwinklig zueinander angeordnete Schenkel 12 aufweisen, die in den Einsteckkanal 9 des jeweils zugeordneten Profilabschnitts 8 eingreifen. Der Querschnitt der Schenkel 12 ist auf den Querschnitt des Einsteckkanals 9 so abgestimmt, dass sich ein wackelfreier Sitz ergibt, wie aus Figur 4 erkennbar ist.

Die die Rahmenschenkel bildenden Profilabschnitte 8a sind, wie aus den Figuren 1 und 4 weiter ersichtlich ist, im Bereich ihrer dem jeweils zugeordneten Anschlussflansch 1 bzw. 3 zugewandten Seite mit einer über ihre Länge durchgehenden, elastischen Leiste 13 versehen. Diese besitzt einen rückwärtigen Haltesteg 14, der in eine zum zugeordneten Anschlussflansch 1 bzw. 3 hin offene Sicke 15 des den zugeordneten Rahmenschenkel bildenden Profilabschnitts 8a eingreift. Die Sicke 15 wird, wie aus Figur 2 ersichtlich ist, durch einen U-förmigen Einzug des radial inneren Randbereichs der dem benachbarten Anschlussflansch 1 bzw. 3 zugewandten Wandung des den Rahmenschenkeln zugrundeliegenden Profils 8 gebildet. Die elastische Leiste 13 ist als Profilleiste ausgebildet, die als aus Gummi oder gummielastischem Kunststoff besteht und als Extrusionsprodukt hergestellt werden kann. Das den Rahmenschenkeln zugrundeliegende Ausgangsmaterial wird als Stangenware hergestellt. Das den elastischen Leisten 13 zugrundeliegende Extrusionsprodukt kann bereits an den Profilstangen über deren Länge durchgehend angebracht werden. Dies ermöglicht die Bewerkstelligung eines zuverlässigen Presssitzes des Haltestegs 14 in der Sicke 15 und damit eines zuverlässigen Halts der elastischen Leiste 13. Gleichzeitig ist hierdurch sichergestellt, dass beim Ablängen eines derartigen Stangenmaterials bereits fertige, mit der elastischen Leiste 13 versehene Rahmenschenkel anfallen.

Das den elastischen Leisten 13 zugrundeliegende Profil ist, wie Figur 4 weiter zeigt, als Hohlkammerprofil ausgebildet, so dass sich auch bei Verwendung von vergleichsweise steifem Material eine ausreichende elastische Nachgiebigkeit ergibt, wodurch Unebenheiten im Bereich des gegenüberliegenden Anschlussflansches 1 bzw. 3 ausgeglichen werden könne. Die elastischen Leisten 13 sind im Bereich der radial inneren Kante der dem Anschlussflansch 1 bzw. 3 zugewandten Seite der Rahmenschenkel angeordnet und besitzen eine mit dem radial inneren Rand des Halterahmens 7 bündige, an ihre rahmenseitige Auflagefläche anschließende Wand 16. Vom rahmenfernen Ende dieser Wand 16 ausgehend verläuft eine weitere Wand 17 zum von der Wand 16 abgewandten Ende einer den Haltesteg 14 tragenden Wand 18, so dass sich insgesamt ein keilförmiger, nach radial außen sich verjüngender Querschnitt ergibt.

Die Halterahmen 7 werden, wie aus Figur 1 erkennbar ist, vom Balg 6 durchgriffen, dessen Endbereiche um die radial innere Außenkante der Halterahmen 7, das heißt um die radial innere Kante der dem jeweils benachbarten Anschlussflansch 1 bzw. 3 zugewandten Außenflanke des betreffenden Halterahmens 7, nach radial außen umgelenkt sind, wobei die im Bereich der Außenflanke der Rahmenschenkel vorgesehenen, über deren Länge durchgehenden elastischen Leisten 13 von den nach radial außen verlaufenden Endbereichen 6a des Balgs lose übergriffen werden. Die im Querschnitt keilförmigen, elastischen Leisten 13 greifen dabei in die durch die radiale Umlenkung der Endbereiche 6a des Balgs 6 gebildete Ecke ein, wodurch sich eine exakte, den Anschlussflanschen 1 bzw. 3 zugewandte, vom Balgmaterial bedeckte Dichtkante ergibt.

Das den Rahmenschenkeln zugrundeliegende Profil 8 ist am radial äußeren Rand der dem jeweils zugeordneten Anschlussflansch 1 bzw. 3 zugewandten Seite mit einer nach radial innen offenen Einstecktasche 20 versehen. Die Endbereiche 6a des Balgs 6 sind in die Einstecktaschen 20 der Rahmenschenkel einführbar. Die lichte Weite der Einstecktasche 20 ist so groß, dass alle gängigen Balgmaterialien einsteckbar sind. Die Einstecktasche 20 wird, wie am besten aus Figur 2 ersichtlich ist, durch eine Abwinklung eines durch zwei aneinander anliegende Wände gebildeten Doppelwandbereichs des Profils 8 gebildet. Die nach radial außen sich verjüngende Keilform der elastischen Leisten 13 begünstigt eine einfache Einführbarkeit der Balgenden in die Einstecktaschen 20.

Zur Sicherung der in die Einstecktaschen 20 der Rahmenschenkel eingreifenden Endbereiche 6a des Balgs 6 sind, wie die Figuren 1 und 4 erkennen lassen, auf den radial äußeren Umfangsbereich der Halterahmen 7 aufsteckbare Klammern 22 vorgesehen, die jeweils eine den Eingangsquerschnitt der benachbarten Einstecktasche 20 überquerende Halteklaue 23 aufweisen. Die Klammern 22 sind hier als Aufsteckklammem ausgebildet, die auf den zugeordneten Randbereich der Halterahmen 7 federnd aufrastbar sind. Im dargestellten Beispiel ist ein zusätzlicher Formschluss vorgesehen. Hierzu ist das Profil 8, wie aus Figur 2 ersichtlich ist, mit einem im Bereich der der Einstecktasche 20 gegenüberliegenden Profilwand vorgesehenen, durch eine keilförmige Ausbuchtung dieser Profilwand gebildeten Steg 24 versehen, so dass sich praktisch ein Rastkopf ergibt, auf den die zugeordneten Klammern 23 formschlüssig aufrastbar sind. Die Klammern 22 besitzen eine etwa C-förmige Konfiguration. Zum Aufrasten der Klammern 22 werden diese mit der Halteklaue 23 an der die Einstecktasche 20 begrenzenden Leiste 25 eingehängt und dann an den zugeordneten Rahmenschenkel angeschwenkt, wobei der der Halteklaue 23 gegenüberliegende, diesem zustrebende Federschenkel 26 über die den Steg 24 hinwegschnappt und diesen untergreift. Um die Handhabung der Klammern 22 zu erleichtern, ist der Schenkel 26 mit einer eine Grifflasche 27 bildenden Abwinklung versehen.

Die Halteklaue 23 ist an ihrem freien Ende, wie aus Figur 5 hervorgeht, mit einer Zahnung 28 versehen. Diese kann in das Balgmaterial einstechen, wodurch der zugeordnete Endbereich 6a des Balgs 6 zuverlässig fixiert werden kann.

Die elastischen Leisten 13 der umlaufenden Rahmenschenkel der Halterahmen 7 bilden zusammen mit dem sie lose übergreifenden Bereich des Balgs 6 einen umlaufenden, elastischen Wulstbereich 19, mit dem ein Halterahmen 7 am jeweils zugeordneten Anschlussrahmen 1 bzw. 3 in dichtende Anlage bringbar ist, wie in Figur 1 rechts angedeutet ist. Ein derartiger Wulstbereich 19 pro Halterahmen 7 genügt. Der Wulstbereich 19 soll zweckmäßig möglichst weit radial innen angeordnet sein. Die elastischen Leisten 13 werden dabei im Rahmen ihrer elastischen Nachgiebigkeit gestaucht, so dass eine zuverlässige Anlage erreicht wird. Auch Unebenheiten im Bereich des Anschlussflansches 1 bzw. 3 lassen sich dadurch ausgleichen. Das die Außenseite des Wulstbereichs 19 bildende Material des Balgs 6, mit dem die Balgbereiche an der jeweils zugeordneten Gegenfläche zur Anlage kommen, besitzt eine feine Oberfläche und gewährleistet eine zuverlässige Abdichtung. Dadurch, dass die elastischen Leisten 13 einen nach radial außen sich verjüngenden Keilquerschnitt aufweisen, ergeben sich vergleichsweise schmale Anlagebereiche am jeweils zugeordneten Anschlusflansch 1 bzw. 3, was zu ausreichend hohen Anpressdrücken führt.

Der Querschnitt der elastischen Leisten 13 ist so bemessen, dass der vorstehend genannte Wustbereich 19 im in Figur 1 links angedeuteten, unbelasteten Zustand die die Einstecktasche 20 begrenzende Leiste 25 zum benachbarten Anschlussflansch 1 bzw. 3 hin überragt, so dass es beim Anbau zwangsläufig zu dem oben erwähnten Stauchvorgang und damit zur Bildung einer zuverlässigen Abdichtung kommt. Die Halterahmen 7 werden durch in Figur 1 angedeutete Schrauben 29 mit dem jeweils zugeordneten Anschlussflansch 3 verschraubt, wobei die Leiste 25 bzw. die hierauf aufgenommenen Klammern 22 ein festes Gegenlager und der oben erwähnte, durch die elastischen Leisten 13 und den diese umfassenden Balgbereich gebildete Wulstbereich 19 ein elastisches Gegenlager bilden. Die Schrauben 29 können daher einfach soweit angezogen werden, bis die Halterahmen 7 parallel zum jeweils zugeordneten Anschlussrahmen 1 bzw. 3 ausgerichtet sind, was die Erzielung einer guten Dichtwirkung begünstigt. Die Schrauben 29 befinden sich im Bereich der Eckverbindungselemente 10, die mit entsprechenden Durchgangslöchern 30 versehen sind. Dasselbe gilt für die Anschlussrahmen 1 bzw. 3.

Die beim Stauchen der elastischen Leisten 13 erfolgende Materialverdrängung führt dazu, dass die Endbereiche der elastischen Leisten 13 aneinander anschließender Rahmenschenkel in zuverlässige gegenseitige Anlage kommen, so dass auch in den Eckbereichen der Halterahmen 7 eine zuverlässige Wulstbildung und damit Abdichtung erfolgt. Es wäre aber auch denkbar, in besonders schwierigen Fällen dies dadurch noch zu verbessern, dass die Platte 11 der Eckverbindungselemente 10 im inneren Eckbereich mit einer beispielsweise durch eine Silikonauflage etc. gebildeten, an die elastischen Leisten 13 der zugeordneten Rahmenschenkel anschließenden, zweckmäßig dreieckförmigen Erhöhung 31 versehen wird, wie in Figur 3 angedeutet ist.

Das den Rahmenschenkeln zugrundeliegende Profil 8 ist auf der dem Steg 24 zugeordneten Seite diesem gegenüberliegend mit einem weiteren Steg 32 versehen, der durch eine um ein abgewinkeltes Ende der betreffenden Profilwand herumlaufendes Ende der anderen Profilwand gebildet wird. Die seitliche Ausladung des Stegs 24 und des Stegs 32 ist gleich. Ebenso entspricht die seitliche Ausladung der die Einstecktasche 20 begrenzenden Leiste 25 in etwa der seitlichen Ausladung der mit ihrem Haltesteg 14 in die Sicke 15 eingesetzten, elastischen Leiste 13 in einem leicht gestauchten Zustand. Hierdurch ist sichergestellt, dass mehrere Profilstangen dieser Art mit bereits angebrachter, elastischer Leiste 13 aufeinandergelegt und gemeinsam in einem Arbeitsgang abgeschnitten werden können. Durch die Stege 24 und 32 und die Leiste 25 ergibt sich zudem eine hohe Biege und Verwindungssteifigkeit des Profils 8, was der Erzielung einer guten Dichtwirkung ebenfalls zuträglich ist.

## Patentansprüche

1. Vorrichtung zur Bildung einer flexiblen Verbindung zwischen zwei Elementen einer von einem Gasstrom durchströmbaren Kanalanordnung, insbesondere zum flexiblen Anschließen eines Kanalgehäuses (4) an einen Anschlussstutzen (1) eines gastechnischen Geräts (2), mit einem aus einem flexiblen Material bestehenden, schlauchförmigen Balg (6), der mit seinen Enden an jeweils einem Halterahmen (7) festlegbar ist, dessen Rahmenschenkel durch Profilabschnitte (8a) gebildet werden, die vorzugsweise durch mit in einem jeweils zugeordneten, profilseitigen Einsteckkanal (9) einsteckbaren Schenkeln (12) versehene Eckverbindungselemente (10) miteinander verbindbar sind, wobei im Bereich der dem jeweils benachbarten Element der Kanalanordnung zugewandten Seite der Halterahmen (7) jeweils mindestens eine Wulstanordnung (19) vorgesehen ist, **dadurch gekennzeichnet, dass** der Balg (6) die Halterahmen (7) durchgreift und jeweils um die radial innere Kante der dem jeweils benachbarten Element der Kanalanordnung zugewandten Seite der Halterahmen (7) radial nach außen umgeschlagen ist, dass die die Rahmenschenkel bildenden Profilabschnitte (8a) im Bereich ihrer dem jeweils benachbarten Element der Kanalanordnung zugewandten Seite jeweils wenigstens eine elastische Leiste (13) tragen und dass die radial nach außen verlaufenden Endbereiche (6a) des Balgs (6) die halterahmenseitig vorgesehenen, elastischen Leisten (13) unter Bildung jeweils einer Wulstanordnung (19) lose übergreifen und radial außerhalb dieser am zugeordneten Halterahmen (7) festlegbar sind.

2. Vorrichtung nach Anspruch 1, **dadurch gekennzeichnet, dass** die elastischen Leisten (13) im Bereich der radial inneren Kante der zugeordneten Seite der die Rahmenschenkel bildenden Profilabschnitte (8a) angeordnet sind, die im Bereich der radial äußeren Kante dieser Seite eine nach radial innen offene Einstecktasche (20) für den zugeordneten Endbereich (6a) des Balgs (6) aufweisen.

3. Vorrichtung nach einem der vorhergehenden Ansprüche, **dadurch gekennzeichnet, dass** die vorzugsweise einen Hohlquerschnitt aufweisenden elastischen Leisten (13) einen keilförmigen, nach radial außen sich verjüngenden Querschnitt aufweisen.

4. Vorrichtung nach einem der vorhergehenden Ansprüche, **dadurch gekennzeichnet, dass** nur über die Länge der Rahmenschenkel durchgehende, elastische Leisten (13) vorgesehen sind und dass diese vorzugsweise mit einem rückwärtigen Haltesteg (14) versehen sind, der in eine zum benachbarten Organ der Kanalanordnung hin offene Sicke (15) des zugeordneten Rahmenschenkels eingepresst ist.

5. Vorrichtung nach einem der vorhergehenden Ansprüche, **dadurch gekennzeichnet, dass** im radial äußeren Umfangsbereich der Halterahmen (7) Klammern (22) vorgesehen sind, die jeweils eine den Eingangsquerschnitt der Einstecktasche (20) überquerende, zum Eingriff mit dem in die Einstecktasche (20) eingeführten Endbereich (6a) des Balgs (6) bringbare Halteklaue (23) aufweisen, die vorzugsweise im Bereich ihres Endes mit einer Zahnung (28) versehen ist.

6. Vorrichtung nach Anspruch 5, **dadurch gekennzeichnet, dass** die die Rahmenschenkel bildenden Profilabschnitte (8a) im Bereich ihres radial äußeren Rands mit einem der Einstecktasche (20) gegenüberliegenden, seitlich vorspringenden Steg (24) versehen sind und dass die Klammern (22), die vorzugsweise als Aufsteckklammern ausgebildet sind, eine im Wesentlichen C-förmige Konfiguration aufweisen und an ihrem der Halteklaue (23) gegenüberliegenden Ende eine Grifflasche (27) aufweisen.

7. Vorrichtung nach einem der vorhergehenden Ansprüche, **dadurch gekennzeichnet, dass** die die Rahmenschenkeln bildenden Profilabschnitte (8a) mit einem den Steg (24) gegenüberliegenden Steg (32) gleicher seitlicher Ausladung versehen ist.

8. Vorrichtung nach einem der vorhergehenden Ansprüche, **dadurch gekennzeichnet, dass** die elastischen Profilelemente (13) zumindest soweit stauchbar sind, dass ihre seitliche Ausladung der seitlichen Ausladung einer die Einstecktasche (20) begrenzenden Leiste (25) entspricht.

9. Vorrichtung nach einem der vorhergehenden Ansprüche, **dadurch gekennzeichnet, dass** die Rahmenschenkel als Abschnitte eines als einteiliges Walzprofil ausgebildeten, einen kastenförmigen Querschnitt aufweisenden stangenförmigen Profils (8) ausgebildet sind.

10. Vorrichtung nach einem der vorhergehenden Ansprüche, **dadurch gekennzeichnet, dass** die Eckverbindungselemente (10) im Bereich ihrer radial inneren Ecke mit einem elastischen Auftrag (31) versehen sind.

## Claims

1. A device for forming a flexible connection between two elements of a duct arrangement through which a gas can flow, in particular for the flexible connection of a duct housing (4) with a connecting port (1) of a gas appliance (2), comprising a hose-shaped bellows (6) which is made of a flexible material and whose two ends are on each side attachable to a retaining frame (7) whose side members are formed by profiled sections (8a) which are preferably connectable with one another by corner elements (10) provided with extensions (12) insertable into associated cavities (9) in the aforesaid profiled sections, and wherein in the area of that side of the retaining frames (7) which faces the neighbouring element of the duct arrangement, provision is made of at least one bulged-out section (19), **characterised in that** the bellows (6) extends through the retaining frames (7) and is folded outwardly around the radially inner edge of that side of the retaining frames (7) which faces the associated neighbouring element of the duct arrangement, further that the profiled sections (8a) forming the frame side members in the area of that side thereof which faces the associated neighbouring element of the duct arrangement comprise at least one elastic strip (13) and that the radially outwardly extending end sections (6a) of the bellows (6) are loosely swung around the elastic strips (13) in the retaining frame, thus forming a bulge (19), and can be fastened to the associated retaining frame (7) at a point located radially outward of the said bulge.

2. A device as claimed in Claim 1 **characterised in that** the elastic strips (13) are arranged in the area of the radially inner edge of the associated side of the profiled sections (8a) forming the retaining frames, which sections in the area of the radially outer edge on this side comprise a pocket (20) which is open in a radially inward direction, such pocket being intended for taking up the associated end section (6a) of the bellows (6).

3. A device as claimed in any of the preceding Claims **characterised in that** the elastic strips (13), which are preferably of internally hollow cross-section, have a wedge-like cross-sectional shape tapering in a radially outward direction.

4. A device as claimed in any of the preceding Claims **characterised in that** such continuous elastic strips (13) are provided only along the length of the retaining frame side members and that the said strips are preferably provided at the rear thereof with a rib (14) which is pressed into a bead (15) of the associated retaining frame side member, which bead is open toward the neighbouring organ of the duct arrangement.

5. A device as claimed in any of the preceding Claims **characterised in that** in the radially outer circumferential area of the retaining frames (7) provision is made of clips (22) which comprise a clamping claw (23) extending over and across the inlet cross-section of the pocket (20) and can be brought into clamping engagement with the end section (6a) of the bellows (6) inserted into such pocket (20), such clamping claw, in the area of its end, being preferably provided with teeth (28).

6. A device as claimed in Claim 5 **characterised in that** the profile sections (8a) forming the retaining frame side members, in the area of their radially outer edge are provided laterally with a rib-like projection (24) located opposite the pocket (20) and that the clips (22), which are preferably of the snap-on type, have an essentially C-shaped configuration and are, at the end opposite to the clamping claw (23), provided with a push-on nose (27).

7. A device as claimed in any of the preceding Claims **characterised in that** the profiled sections (8a) forming the retaining frame side members, on the side opposite to the rib-like projection (24), are provided with a rib-like projection (32) of the same lateral extension as the rib-like projection (24).

8. A device as claimed in any of the preceding Claims **characterised in that** the profiled elastic strips (13) can be compressed at least to such an extent that their lateral extension corresponds to the lateral extension of the profile nose (25) forming the outer side of the pocket (20).

9. A device as claimed in any of the preceding Claims **characterised in that** the retaining frame side members are designed as sectional parts of a single-piece bar-shaped rolled steel section (8) of box-shaped cross-section.

10. A device as claimed in any of the preceding Claims **characterised in that** the corner elements (10) connecting the retaining frame side members, in the area of their radially inner corner, are provided with an elastic layer (31) deposited thereon.

## Revendications

1. Dispositif pour former un raccordement flexible entre deux éléments d'une disposition de canaux qui peut être traversée par un courant de gaz, en particulier pour raccorder d'une manière flexible un carter de canal (4) à une tubulure de raccordement (1) d'un appareil (2) à technique gazière, comprenant un soufflet (6) tubulaire qui est fait d'une matière flexible et qui, avec ses extrémités, peut être fixé sur respectivement un cadre de maintien (7) dont les branches de cadre sont formées par des tronçons de profilé (8a) qui, de préférence, peuvent être reliés entre eux par l'intermédiaire d'éléments angulaires d'assemblage (10) pourvus de branches (12) qui peuvent être introduites dans un canal d'introduction (9) respectivement associé du profilé, respectivement au moins une disposition à renflement (19) étant prévue dans la zone du côté des cadres de maintien (7) qui montre vers l'élément respectivement voisin de la disposition de canaux, **caractérisé par le fait que** le soufflet (6) passe à travers les cadres de maintien (7) et est replié radialement vers l'extérieur respectivement sur l'arête radialement intérieure du côté des cadres de maintien (7) qui montre vers l'élément respectivement voisin de la disposition de canaux, que les tronçons de profilé (8a) formant les branches de cadre portent respectivement au moins une tringle élastique (13) dans la zone de leur côté montrant vers l'élément respectivement voisin de la disposition de canaux, et que les zones terminales (6a) du soufflet (6) qui vont radialement vers l'extérieur s'étendent lâchement, en formant respectivement une disposition à renflement (19), sur les tringles élastiques (13) prévues du côté du cadre et peuvent être fixées, radialement à l'extérieur de ladite disposition à renflement, sur le cadre associé de maintien (7).

2. Dispositif selon la revendication 1, **caractérisé par le fait que** les tringles élastiques (13) sont disposées dans la zone de l'arête radialement intérieure du côté associé des tronçons de profilé (8a) qui forment les branches de cadre et qui, dans la zone de l'arête radialement extérieure de ce côté, présentent une poche d'introduction (20) qui est ouverte radialement vers l'intérieur et destinée à la zone terminale associée (6a) du soufflet (6).

3. Dispositif selon l'une des revendications précédentes, **caractérisé par le fait que** les tringles élastiques (13) présentant de préférence une section transversale creuse présentent une section transversale en forme de coin se rétrécissant radialement vers l'extérieur.

4. Dispositif selon l'une des revendications précédentes, **caractérisé par le fait que** l'on prévoit des tringles élastiques (13) s'étendant seulement sur la longueur des branches de cadre, et que ceux-ci sont pourvus de préférence d'une entretoise arrière de maintien (14) qui est pressée dans une cannelure (15) de la branche associée de cadre, ladite cannelure étant ouverte vers l'organe voisin de la disposition de canaux.

5. Dispositif selon l'une des revendications précédentes, **caractérisé par le fait que** des agrafes (22) sont prévues dans la zone périphérique radialement extérieure des cadres de maintien (7), lesdites agrafes présentant respectivement une griffe de fixation (23) qui traverse la section d'entrée de la poche d'introduction (20) et qui peut être mise en prise avec la zone terminale (6a) du soufflet (6) laquelle est introduite dans la poche d'introduction (20), ladite griffe de fixation étant pourvue de préférence, dans la zone de son extrémité, d'une denture (28).

6. Dispositif selon la revendication 5, **caractérisé par le fait que** les tronçons de profilé (8a) formant les branches de cadre sont pourvus, dans la zone de leur bord radialement extérieur, d'une entretoise (24) qui fait saillie latéralement et qui se trouve en vis-à-vis de la poche d'introduction (20), et que les agrafes (22) qui, de préférence, sont réalisées en tant qu'agrafes à rapporter par encliquetage, présentent une configuration pour l'essentiel en forme de C et présentent, à leur extrémité opposée à la griffe de fixation (23), une patte de maniement (27).

7. Dispositif selon l'une des revendications précédentes, **caractérisé par le fait que** les tronçons de profilé (8a) formant les branches de cadre sont pourvus d'une entretoise (32) située en vis-à-vis de l'entretoise (24) et ayant la même saillie latérale.

8. Dispositif selon l'une des revendications précédentes, **caractérisé par le fait que** les éléments profilés élastiques (13) peuvent être refoulés au moins dans une telle mesure que leur saillie latérale correspond à la saillie latérale d'une tringle (25) limitant la poche d'introduction (20).

9. Dispositif selon l'une des revendications précédentes, **caractérisé par le fait que** les branches de cadre sont réalisées comme segments d'un profilé (8) en forme de barre qui est réalisé en tant que profilé laminé en une seule pièce et qui présente une section transversale en forme de caisse.

10. Dispositif selon l'une des revendications précédentes, **caractérisé par le fait que** les éléments angulaires d'assemblage (10) sont pourvus, dans la zone de leur coin radialement intérieur, d'une couche élastique (31).
